# EUROPEAN PATENT APPLICATION

(11) **EP 4 071 498 A1**
(43) Date of publication of application: **12.10.2022**
(21) Application number: 21167706.7
(22) Date of filing: 09.04.2021
(51) Int. Cl.: G01S 7/02, G01S 13/931

(54) **METHODS FOR RADAR INTERFERENCE MITIGATION WITH BROADCASTING CENTER**

(71) Applicant: Aptiv Technologies Limited, St. Michael (BB)
(72) Inventor: TORRES AVENDANO, Felipe, 40723 Hilden (DE); ESPER, Michael, 47665 Sonsbeck (DE)
(74) Representative: Vigand, Philippe

(57) **Abstract**

A method, carried out by a first radar sensor device (400A) on a first vehicle (100) in an area (500), includes:
- transmitting to a broadcasting center (200) a navigation information of the first radar sensor device (400A), a radar parameter information including the current radar operating parameters of said first radar sensor device (400A) and a mitigation capability information indicating the capabilities of said first radar sensor device (400A) to change radar parameter(s) to mitigate radar interference;
- receiving from the broadcasting center (200) an updated list of radar sensor devices (400) in said area (500) including, for each radar sensor device (400), a navigation information and a radar parameter information, the radar parameter information for the first radar sensor device (400A) including a new radar parameter assigned in compliance with the transmitted mitigation capability information,
- activating the new radar parameter in the first radar sensor device.

## Description

### TECHNICAL FIELD

The present disclosure relates to the field of radar interference mitigation to mitigate radar interference(s) between radar sensor devices on vehicles, for example on self-driving vehicles.

### BACKGROUND

A radar, or radar sensor, is a detection device that uses radio waves to determine information about objects such as the range, angle, shape, size and/or velocity of the objects.

A radar has a transmitter producing electromagnetic waves (in other words: an electromagnetic signal) in the radio or microwaves domain, a transmitting antenna, a receiving antenna (the same antenna may be used for transmitting and receiving), a receiver and a processor to determine properties of the object(s). The radar signal (pulsed or continuous) from the transmitter reflects off the object and returns to the receiver, giving information about the object.

Radars are used in vehicles to support drivers in driving safely, for example for Adaptive Cruise Control. Moreover, radars are a key element for autonomous or self-driving vehicles. They serve to map the environment and detect vehicles, obstacles, pedestrians, bikes, etc., in order to navigate safely. The self-driving vehicles need to have a plurality of radars to cover all sides around the vehicle. Radars have the capability of working under various conditions such as day, night, rain, fog, snow, etc....

Radar signals have different characteristics. For example, the radar signals can be pulsed or continuous and use one of different modulation schemes such as FMCW (Frequency Modulated Continuous Waves), PMCW (Phase Modulated Continuous Waves), OFDM (Orthogonal Frequency-Division Multiplexing).

Today, in the automotive field, many automotive long-range radars are based on Frequency Modulated Continuous Wave (FMCW) and operate in the 76-77 GHz band or the 24 GHz band.

In the future, it is expected that the number of radars on the roads will substantially increase, in particular due to the increasing deployment of self-driving vehicles and the increase of the number of radars per vehicle. This will result in an increasing concern about radar interference. In other words, radar interference between vehicular radar sensors is anticipated to become a major challenge.

As the number of vehicular radars increase on the roads, it becomes more likely that two radars face each other and have same radar parameters resulting in saturating at least one of the two radars, termed as the victim radar, by the transmit signal of the other radar, termed as the interferer radar, and causing the victim radar to be temporarily blinded. The radar blindness is a major security issue impeding the deployment of self-driving vehicles.

In order to avoid or limit the radar interference phenomenon, different solutions for radar interference mitigation are known.

A first known solution is based on interference suppression or cancellation, for example by using physical layer techniques. Such an approach requires additional resources in the radar sensor device and is not efficient enough per se.

A second known solution consists in assigning randomly new radar parameters to interferer or victim radars, for example a time offset or a frequency offset, as a counter-measure to avoid or limit the radar interference. The second solution is not enough either, because the random assignment scheme is likely to result in conflicting assignments as the number of radars per vehicle and the number of vehicles equipped with radars increase.

A third solution is disclosed in the document "RadarMAC: Mitigating Radar Interference in Self-Driving Cars", J. Khoury, R. Ramanathan, D. McCloskey, R. Smith and T. Campbell, 2016 13th Annual IEEE International Conference on Sensing, Communication, and Networking (SECON), London, 2016, pp. 1-9, that addresses the problem of assigning conflict-free radar parameters so as to mitigate radar interference. The system of RadarMAC includes a control center to which a fleet of cars are connected via an LTE (Long Term Evolution) link. The system operates in a continuous loop having four steps:
(1) each car sends a position message to the control center every Tₚₒₛ seconds;
(2) the control center collects the position information from all the cars in its purview and computes the radar parameters for each radar on each car;
(3) the control center pushes down each car's radar parameters with a timestamp through the LTE link;
(4) the cars activate the received radar parameters at the specified timestamp.

In the RadarMAC system, the control center unilaterally assigns radar parameters to each radar on each car. Such a solution lacks flexibility and cooperation as the radar sensor devices are forced to change some radar parameters under control of the control center.

Therefore, there is a need for a more flexible and cooperative method for automotive radar interference mitigation.

### SUMMARY

The present disclosure concerns a method for mitigating radar interference in an area, carried out by a first radar sensor device on a first vehicle and including the following steps :
- transmitting to a broadcasting center, via a wireless communication, a navigation information of the first radar sensor device, a radar parameter information including the current radar operating parameters of said first radar sensor device and a mitigation capability information indicating the capabilities of said first radar sensor device to change one or more radar parameters to mitigate radar interference;
- receiving from the broadcasting center, via the wireless communication, an updated list of radar sensor devices in said area including, for each radar sensor device, a navigation information and a radar parameter information, the radar parameter information for the first radar sensor device including a new radar parameter assigned in compliance with the transmitted mitigation capability information,
- activating the new radar parameter in the first radar sensor device.

In this way, the assignment of any new radar parameter to the first radar sensor device results from a negotiation between the first radar sensor device and the broadcasting center. The first radar sensor device transmits to the broadcasting center its current radar parameters and a mitigation capability information indicating its capabilities to change one or more radar parameter. In other words, the first radar sensor device transmits to the broadcasting center what it does presently and what it can and agrees to do in the future in terms of radar parameters. By transmitting its mitigation capability information, the first radar sensor device agrees on any change of radar parameter complying with the transmitted mitigation capability information. The first radar sensor device is not forced to activate a non-desired radar parameter.

In an embodiment, the method further includes, before the step of transmitting, a step of receiving from the broadcasting center, via the wireless communication, a current list of the radar sensor devices in said area, and a step of estimating radar interferences between the first radar sensor device and the other radar sensor devices of the list, based on the current list.

By estimating the radar interference(s) with the other radar sensor devices of the list, the first radar sensor device can determine the measure(s) that it can take (and accepts to take) to mitigate the estimated radar interference(s).

The first radar sensor device can compute an interference graph or map based on an interference model, which can be for instance based on a Signal-to-Interference-Ratio and/or on the distance between the radar sensors.

In an embodiment, the method further includes, before the step of transmitting, a step of receiving from the broadcasting center, via the wireless communication, an information about estimated radar interferences between the first radar sensor device and the other radar sensor devices in the area. In that case, the broadcasting center is responsible for estimating the radar interferences between radar sensor devices in the area and broadcasting information about the estimated radar interferences to the radar sensor devices.

In an embodiment, the first radar sensor device detects a second radar sensor device without capability of communicating with the broadcasting center and transmits information on the detected second radar sensor device to the broadcasting center.

The first radar sensor device can receive a radar signal transmitted by the second radar sensor device, determine radar parameter information related to the current radar operating parameters of the second radar sensor device by analyzing the received radar signal from the second radar sensor, and transmit said radar parameter information to the broadcasting center.

The first radar sensor device can also determine a navigation information about the second radar sensor device, including a position information and/or a moving information, and transmit the navigation information to the broadcasting center.

The present disclosure also concerns a second method for mitigating radar interferences between radar sensor devices on vehicles located in an area, carried out by a broadcasting center and including the following steps:
- receiving, from each radar sensor device located in the area, via a wireless communication, a navigation information of said radar sensor device, a radar parameter information including current radar operating parameters of said radar sensor device and a mitigation capability information indicating capabilities of said radar sensor device to change one or more radar parameters to mitigate radar interference;
- estimating radar interferences between the radar sensor devices in the area and assigning a new radar parameter to at least one radar sensor device, in compliance with the mitigation capability information of said at least one radar sensor device, to mitigate an estimated radar interference ;
- updating a list of radar sensor devices in said area including, for each radar sensor device, a navigation information and a radar parameter information, by adding the new radar parameter in the radar parameter information for said at least one first radar sensor device;
- broadcasting wirelessly the updated list to the radar sensor devices in the area.

The broadcasting center assigns radar parameters to the radar sensor devices on vehicle located in the area, taking into account the current radar parameters and the mitigation capability information of the radar sensor devices.

The list can include, for each radar sensor device, at least one of the radar parameters of the group including a modulation scheme, a start modulation frequency, a center modulation frequency, a modulation frequency offset, a modulation bandwidth, a duty cycle, a time offset, a transmit power level, and a polarization.

In an embodiment, the broadcasting center
receives from a first radar sensor device an information on a second radar sensor device without capability of communicating with the broadcasting center and
updates the list by adding the second radar sensor device in said list.

The information on the second radar sensor device can include a radar parameter information related to current radar operating parameters of the second radar sensor device.

The present disclosure also concerns a radar sensor device for a vehicle including a communication interface to communicate with a broadcasting center, via a wireless communication communication, and means for executing the steps of the method, previously defined, carried out by the radar sensor device.

The present disclosure also concerns a vehicle including at least one radar sensor device as defined above.

The present disclosure also concerns a computer program having instructions to cause the radar sensor device above defined to execute the steps of the method, previously defined, carried out by the radar sensor device.

The present disclosure also concerns a broadcasting center including a communication interface to communicate wirelessly with radar sensor devices on vehicles located in an area, and means for executing the steps of the second method.

The present disclosure also concerns a computer program having instructions to cause the broadcasting center above defined to execute the steps of the second method.

The present disclosure also concerns a distributed system including the broadcasting center as previously defined in charge of an area and a plurality of vehicles located in said area, each vehicle having at least one radar sensor device as previously defined.

### BRIEF DESCRIPTION OF THE DRAWINGS

Other features, purposes and advantages of the disclosure will become more explicit by means of reading the detailed statement of the non-restrictive embodiments made with reference to the accompanying drawings.
Figure 1 shows a distributed system for mitigating radar interference between radar sensor devices on vehicles in an area, including a broadcasting center and vehicles, according to an embodiment.
Figure 2 is a flowchart of a method for radar interference mitigation, carried out by a radar sensor device on a vehicle, according to an embodiment, and a method for radar interference mitigation, carried out by the broadcasting center, according to an embodiment.
Figure 3 is a functional block diagram of a radar sensor device, according to an embodiment.
Figure 4 represents a radar signal transmitted by a radar sensor device and an echoed radar signal received by the radar sensor device, according to an embodiment.
Figure 5 shows a flowchart of a method for radar interference mitigation, carried out by a radar sensor device on a vehicle, according to an embodiment, and a method for radar interference mitigation, carried out by the broadcasting center, according to an embodiment, in case of detection of a radar sensor device without communication capability.

### DETAILED DESCRIPTION

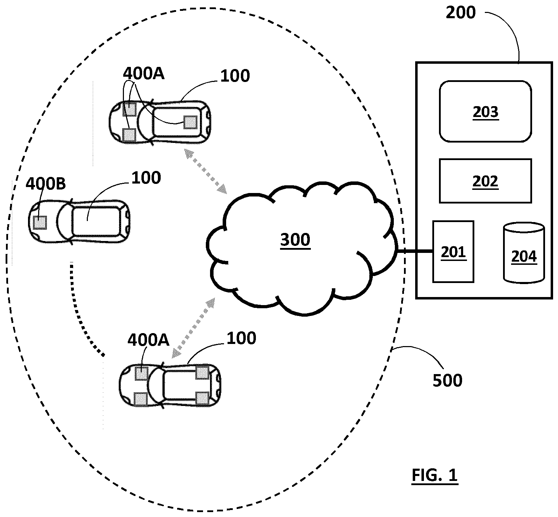

Figure 1 shows a broadcasting center 200 and a plurality of vehicles 100 located in an area 500, within a purview of the broadcasting center 200. Each vehicle 100 is equipped with one or more radar sensor devices 400.

There are two kinds of radar sensor device 400:
- a connected radar sensor device, referenced 400A, with capability to communicate bidirectionally with other systems outside of the vehicle 100, such as another vehicle, a radar sensor device on another vehicle, a component of the road infrastructure and/or an element of a wireless communication network 300 (for example the broadcasting center 200),
- a non-connected radar sensor device, referenced 400B, without capability to communicate with other systems outside the vehicle 100.

The vehicle 100 can be a connected vehicle with capability for communicating wirelessly with different systems outside the vehicle 100.

In a first embodiment, the radar sensor device 400A has a communication interface to interface with an on-board network of the vehicle 100 and uses a wireless communication module of the connected vehicle 100 to communicate with other systems outside the vehicle 100 via wireless communications. In a second embodiment, the connected radar sensor device 400A has an internal communication module to communicate directly with other systems (outside and/or inside the vehicle 100) via wireless communications.

In operation, the connected radar sensor device 400A communicates with other systems outside the vehicle 100 via vehicle-to-vehicle (V2V) communications, vehicle-to-infrastructure (V2I) communications, vehicle-to-network (V2N) communications, and/or more generally vehicle-to-everything (V2X) communications.

In an embodiment, the connected radar sensor devices 400A on the vehicles 100 communicate with the broadcasting center 200 through a wireless communication network 300, as shown in figure 1.

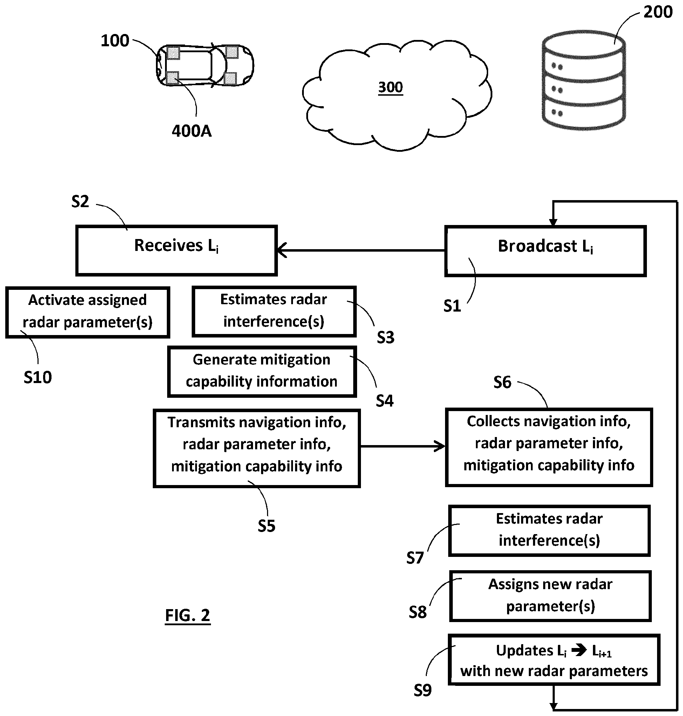

In reference to figure 2, a method for radar interference mitigation, carried out by the radar sensor device 400A on the vehicle 100, according to an embodiment, and a method for radar interference mitigation, carried out by the broadcasting center 200, according to an embodiment, will now be described.

The broadcasting center 200 is in charge of collecting the radar parameters of radar sensor devices 400 (400A and optionally 400B) on vehicles located 100 in the area 500 and keeping them up to date.

The radar parameters of a radar sensor device 400 are the operating parameters under which the radar sensor device 400 operates. The radar parameters define characteristics of the radar signal transmitted and received by the radar sensor device 400. In some embodiments, the radar parameters include modulation parameters defining characteristics of a modulation of the radar signal, a duty cycle, and a transmit power level. The duty cycle can be defined as a ratio between an observation time, corresponding to the time period within a measurement cycle during which a radar signal is transmitted and an echo radar signal is received, and the total time of the measurement cycle.

The broadcasting center 200 stores a list Lᵢ of radar sensor devices 400 in the area 500, valid during a time period i. The list Lᵢ includes identifiers of radar sensor devices 400 on vehicles 100 located in the area 500 during the time period i and collected by the broadcasting center 200. In addition, for each radar sensor device 400, the list Lᵢ includes a navigation information and a radar parameter information.

The navigation information for a given radar sensor device 400 on a given vehicle 100 includes position information and moving information about the radar sensor device 400. For example, it includes information for geolocating the vehicle 100 at a time point tₙ and during a short period of time Δt in the future starting from the point tₙ in time (for example z milliseconds after time point tₙ, z being within the range of 150ms-200ms). In an embodiment, at any point in time tₙ, the navigation information includes 2-dimensional position coordinates (X,Y), a heading θ, a velocity v, an acceleration a, and an expected trajectory traj for z milliseconds in the future, of the vehicle 100. In addition, the position information about the radar sensor device 400 can include a position and an orientation of the radar sensor device 400 in a reference system of the vehicle 100.

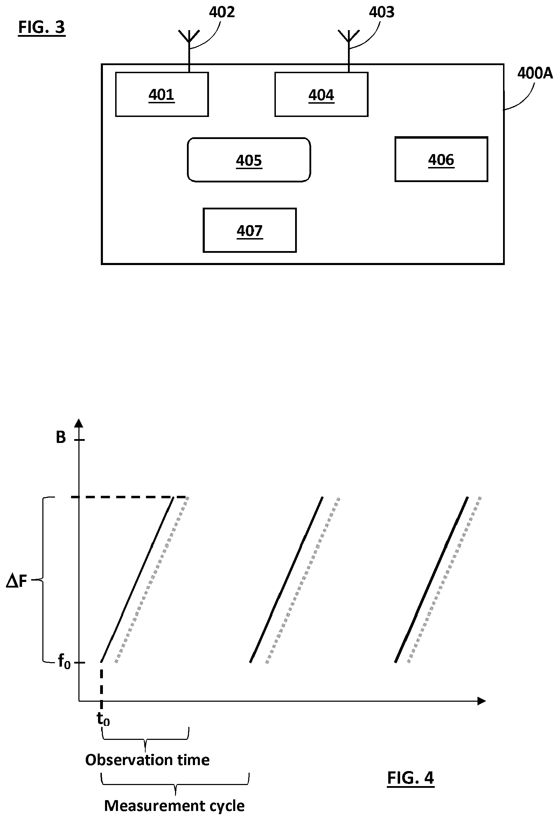

The radar parameter information of the radar sensor device 400 includes current radar operating parameters of said radar sensor device 400. In an embodiment, the radar sensor device 400 is a FMCW radar Frequency Modulated Continuous Wave radar). The FMCW radar radiates continuous transmission power and changes its operating frequency during measurement cycles (in other words, the transmission signal is cyclically modulated in frequency). For example, the FMCW radar changes its operating frequency linearly according to an ascending ramp at each cycle, as shown in figure 4. In case of a FMCW (Frequency Modulated Continuous Wave) radar, the radar parameters can include a frequency offset f₀ with respect to a reference frequency (corresponding to the origin of the graph in figure 4), a time offset t₀ defining a time slot for starting each measurement cycle, a bandwidth ΔF (for example, a ramp bandwidth) within a radar band B, a duty cycle d, and a transmit power level. As an illustrative and non-limitative example, the radar band B is the frequency range between 76 GHz and 77 GHz.

The radar sensor device 400 could be any other type of radar, such as a PMCW radar (Phase Modulated Continuous Wave) radar, or an OFDM (Orthogonal Frequency-Division Multiplexing) radar or others.

In addition, the broadcasting center 200 can collect and store, at least for the connected radar sensor devices 400A, a mitigation capability information, as explained later.

The distributed system of figure 1 operates in a continuous loop including the following steps S1 to S9. The steps S1 to S9 are repeated cyclically.

In a first step S1, the broadcasting center 200 broadcasts in the area 500 the current list Lᵢ of all radar sensor devices 400 currently detected in the area 500, through the wireless communication network 300. The broadcasted list Lᵢ includes, for each radar sensor device, an up-to-date navigation information and an up-to-date radar parameter information. Additionally or alternatively, the list Lᵢ could be transmitted via road side units in the area 500.

In a step S2, each connected radar sensor device 400A in the area receives the list Lᵢ through the wireless communication network 300 and carries out the following steps S3, S4, S5, S10. The steps S3, S4, S5, S10 are described below for a first connected radar sensor device 400A, but are executed by each connected radar sensor devices 400A in the area 500.

If the vehicle 100 equipped with the radar sensor device 400A has just entered the area 500, the radar sensor device 400A is not part of the list Lᵢ yet. In that case, the method goes directly to the step S3.

If the vehicle 100 equipped with the radar sensor device 400A was already located in the area 500 during the previous cycle i-1, the radar sensor device 400A is already part of the broadcasted list Lᵢ. In that case, the first radar sensor device 400A carries out the steps S10 and S3.

In the step S10, the radar sensor device 400A extracts the radar parameter information assigned to said radar sensor device 400A in the list Lᵢ and activate any newly assigned radar parameter(s). As will be understood later, a new radar parameter may be assigned by the broadcasting center 200 in compliance with a mitigation capability information of the radar sensor device 400A.

In the step S3, the first connected radar sensor device 400A estimates radar interferences between said first radar sensor device 400A, as a victim radar, and other radar sensor devices 400 in the list Lᵢ, as potential interferer radars. The estimation is made using the navigation information and the radar parameter information about the radar sensor devices 400 in the list Lᵢ. The radar interference(s) can be estimated for a current point in time and for a short time period in the future, based on the current position and the expected trajectory of each radar sensor device 400. There are different ways of estimating the radar interference between the first radar sensor device 400A and the other radar sensor devices 400 in the list Lᵢ. A first way is to compute an interference graph or map based on an interference model using for example a Signal-to-Interference-Ratio (SIR) as disclosed in the paper "RadarMAC: Mitigating Radar Interference in Self-Driving Cars", J. Khoury, R. Ramanathan, D. McCloskey, R. Smith and T. Campbell, 2016 13th Annual IEEE International Conference on Sensing, Communication, and Networking (SECON), London, 2016, pp. 1-9. A second way is to compute the interference graph or map based on an interference model using the distance between the radar sensor devices 400, instead of the SIR. The radiation pattern directivity of the transmitter antenna and receiver antenna can also be taken into account. Any other method for estimating radar interference could be used.

In a step S4, the first connected radar sensor device 400A determines how it can change one or more of its radar parameters to mitigate the radar interference(s) estimated in the step S3 and generates a mitigation capability information indicating the capabilities of the first radar sensor device 400A to change one or more radar parameters to mitigate radar interference.

In a step S5, the first connected sensor device 400A transmits to the broadcasting center 200, through the wireless communication network 300, a navigation information of the first radar sensor device 400A, a radar parameter information including the current radar operating parameters of the first radar sensor device 400A and the mitigation capability information indicating the capabilities of the first radar sensor device 400A to change one or more radar parameters to mitigate radar interference.

The mitigation capability information of the radar sensor device 400A indicates one or more of the measures that the radar sensor device 400A accepts to take for radar interference mitigation. An illustrative and non-limitative list of such measure for radar interference mitigation is given below:
- reducing the transmit power level p,
- reducing the bandwidth ΔF,
- reducing the duty cycle d,
- setting a frequency offset f₀,
- setting a time offset t₀,
- change the sign of the frequency ramp,
- change the polarization of the radar signal.

In a step S6, the broadcasting center 200 collects the navigation information, the radar parameter information and the mitigation capability information from all the connected radar sensor devices 400A in the area 500.

In step S7, the broadcasting center 200 estimates radar interferences between the radar sensor devices 400 in the area 500 based on the navigation information and radar parameter information received from the radar sensor devices 400 in the area 500.

Then, in a step S8, the broadcasting center 200 determines radar parameters for each radar sensor device 400 according to the received radar parameter information and mitigation capability information of said radar sensor device. More precisely, in case that no radar interference is estimated for a radar sensor device 400, the broadcasting center 200 maintains unchanged the radar parameter information of said radar sensor device 400. But, in case that a radar interference is estimated for two radar sensor devices 400, the broadcasting center 200 assigns a new radar parameter to at least one of the two radar sensor devices 400A to mitigate the estimated radar interference. The new radar parameter assigned to the radar sensor device 400A complies with the mitigation capability information of said radar sensor device 400.

In a step S9, the broadcasting center 200 updates the current list Lᵢ of radar sensor devices 400 in the area 500 by adding each new radar parameter in the radar parameter information for the corresponding radar sensor device 400 as assigned in the step S8. The updated list is referenced as Lᵢ₊₁.

The steps S1 to S9 are repeated in a next loop i+1 with the updated list Lᵢ₊₁. In particular, in the loop i+1, the first radar sensor device 400A receives the updated list Lᵢ₊₁ in the step S2 and activates the radar parameter newly assigned by the broadcasting center 200 in the step S8. A new radar parameter can be assigned with a timestamp so that the radar sensor device 400 will activate the new radar parameter at the specified timestamp.

In an embodiment, the first radar sensor device 400 does not perform the step S3 of estimating radar interference(s) but receives from the broadcasting center 200, through the wireless communication network 300, an information about radar interferences estimated between the first radar sensor device 400 and the other radar sensor devices in the area based on the current list Lᵢ. For example, after estimating the radar interference(s) between the radar sensor devices 400 in the area 500, the broadcasting center 200 broadcasts in the area 500 an information about the estimated radar interferences between radar sensor devices 400 to all connected radar sensor devices 400A.

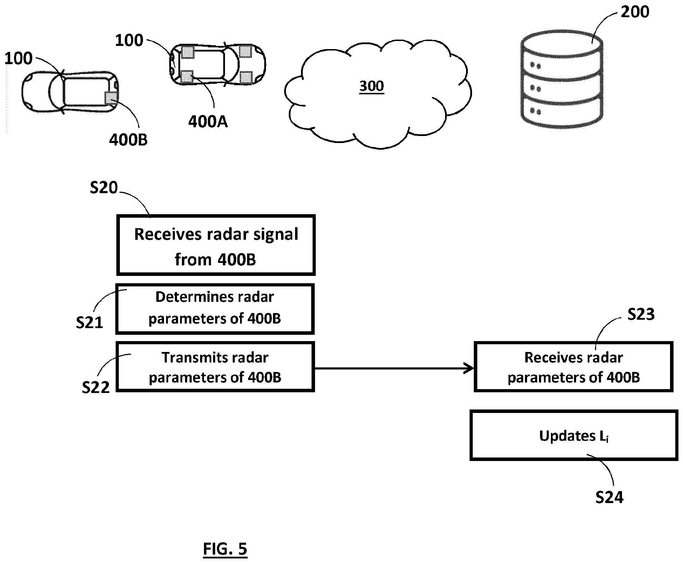

In an embodiment, the first radar sensor device 400A with communication capability can detect a second radar sensor device 400B without capability of communicating with the broadcasting center 200 in the area 500, and transmits information on the detected second radar sensor device 400B to the broadcasting center 200. More precisely, with reference to figure 5, when the first radar sensor device 400A receives a radar signal transmitted by the second radar sensor device 400B in a step S20, the first radar sensor device 400A determines a radar parameter information including current radar operating parameters of the second radar sensor device 400B by analyzing the received radar signal from the second radar sensor 400B in a step S21, and transmits information on the second radar sensor device 400B to the broadcasting center 200 in a step S22. The broadcasting center 200 receives from the first radar sensor device 400A the information on the second radar sensor device 400B in a step S23 and updates the list Lᵢ by adding the second radar sensor device in said list Lᵢ in a step S24. The information on the second radar sensor device 400B transmitted by the first radar sensor device 400A to the broadcasting center 200 can include an identifier, a navigation information (position and/or moving data), a radar parameter information, of the second radar sensor device 400B. The steps S20 to S24 can be performed at any time during a loop as described previously and allow to add the radar sensor device 400B without communication capability in the updated list Lᵢ₊₁ broadcasted in the next loop.

Figure 3 shows schematically a functional block diagram of a radar sensor device 400A with communication capability, according to an embodiment.

The radar sensor device 400A has a transmitter 401 producing electromagnetic waves (in other words: an electromagnetic signal) in the radio or microwaves domain, a transmitting antenna 402, a receiving antenna 403, a receiver 404 and a processor 405 to determine properties of the object(s) based on the transmitted radar signals and received radar signals.

Moreover, in the present disclosure, the radar sensor device 400A has a communication interface 406 to communicate with an outside system and a component 407 for radar interference mitigation.

The communication interface 406 can be a communication interface to interface with an on-board network of the vehicle 100, in case that the radar sensor device 400A communicates with outside systems, for example with the broadcasting center 200, via a wireless communication of the vehicle 100 that is a connected vehicle. In another embodiment, the communication interface 406 allows to communicate directly with a system outside the vehicle 100 via a wireless communication.

In an embodiment, the radar sensor device 400A can receive information from the global navigation system (GNSS) via the communication interface 406.

In an embodiment, the component 407 is a software component (in other words: a computer program) having instructions to cause the radar sensor device 400A to execute the steps of the method for radar interference mitigation (i.e., the steps carried out by the first radar sensor device 400A). The software component runs on the processor 405 of the radar sensor device 400A. The software component 407 (or computer program) can be stored in a storage module such as volatile memory (e.g., ROM, RAM, etc.) and/or non-volatile memory (e.g., Flash, NAND, etc.), that is permanently or removably integrated in the radar sensor device 400A, and can be executed by a processor, a computer, or a calculator.

With reference to figure 1, the broadcasting center 200 has a communication interface 201 to communicate with radar sensor devices 400A in the area 500 through the wireless communication network 300, a processor 202 and a software component 203 (in other words: a computer program) running on the processor 202 and having instructions to cause the broadcasting center to execute the steps of the second method for radar interference mitigation. The software component 203 (or computer program) can be stored in a storage module such as volatile memory (e.g., ROM, RAM, etc.) and/or non-volatile memory (e.g., Flash, NAND, etc.), that is permanently or removably integrated in the broadcasting center 200, and can be executed by a processor, or a computer. The broadcasting center 200 has also a memory or database 204 to store the list of radar sensor devices in the area 500 and the information about the mitigation capability collected from the radar sensor devices 400A.

## Claims

1. A method for mitigating radar interference in an area (500), carried out by a first radar sensor device (400A) on a first vehicle (100) and including the following steps :
- transmitting (S5) to a broadcasting center (200), via a wireless communication (300), a navigation information of the first radar sensor device (400A), a radar parameter information including the current radar operating parameters of said first radar sensor device (400A) and a mitigation capability information indicating the capabilities of said first radar sensor device (400A) to change one or more radar parameters to mitigate radar interference;
- receiving (S2) from the broadcasting center (200), via the wireless communication (300), an updated list (Lᵢ₊₁) of radar sensor devices (400) in said area (500) including, for each radar sensor device (400), a navigation information and a radar parameter information, the radar parameter information for the first radar sensor device (400A) including a new radar parameter assigned in compliance with the transmitted mitigation capability information,
- activating (S10) the new radar parameter in the first radar sensor device (400A).

2. The method according to claim 1, further including, before the step of transmitting (S5), a step (S2) of receiving from the broadcasting center (200), via the wireless communication (300), a current list (Lᵢ) of the radar sensor devices (400) in said area (500), and a step (S3) of estimating radar interferences between the first radar sensor device (400A) and the other radar sensor devices (400) of the list (Lᵢ), based on the current list (Lᵢ).

3. The method according to claim 2, wherein the first radar sensor device (400A) computes an interference graph based on a Signal-to-Interference-Ratio or a distance between radar sensor devices.

4. The method according to claim 1, further including, before the step of transmitting, a step of receiving from the broadcasting center (200), through the wireless communication (300), an information about estimated radar interferences between the first radar sensor device and the other radar sensor devices in the area (500).

5. The method according to any of claims 1 to 4, wherein
the first radar sensor device (400A) detects a second radar sensor device (400B) without capability of communicating with the broadcasting center (200) and transmits information on the detected second radar sensor device (400B) to the broadcasting center (200).

6. The method according to claim 5, wherein the first radar sensor device (400A) receives (S20) a radar signal transmitted by the second radar sensor device (400B), determines (S21) radar parameter information related to the current radar operating parameters of the second radar sensor device (400B) by analyzing the received radar signal from the second radar sensor (400B), and transmits (S22) said radar parameter information to the broadcasting center (200).

7. A method for mitigating radar interferences between radar sensor devices (400) on vehicles (100) located in an area (500), carried out by a broadcasting center (200) and including the following steps:
- receiving (S6), from each radar sensor device (400A) located in the area (500), via a wireless communication (300), a navigation information of said radar sensor device (400A), a radar parameter information including current radar operating parameters of said radar sensor device (400A) and a mitigation capability information indicating capabilities of said radar sensor device (400A) to change one or more radar parameters to mitigate radar interference;
- estimating (S7) radar interferences between the radar sensor devices (400) in the area (500) and assigning (S8) a new radar parameter to at least one radar sensor device (400A), in compliance with the mitigation capability information of said at least one radar sensor device (400A), to mitigate an estimated radar interference ;
- updating (S9) a list (Lᵢ) of radar sensor devices (400) in said area (500) including, for each radar sensor device, a navigation information and a radar parameter information, by adding the new radar parameter in the radar parameter information for said at least one first radar sensor device (400A);
- broadcasting wirelessly the updated list (Lᵢ₊₁) to the radar sensor devices (400A) in the area (500).

8. The method according to claim 7, wherein the list (Lᵢ, Lᵢ₊₁) includes, for each radar sensor device (400), at least one of the radar parameters of the group including a modulation scheme, a start modulation frequency, a center modulation frequency, a modulation frequency offset, a modulation bandwidth, a duty cycle, a time offset, a transmit power level, and a polarization.

9. The method according to claim 7 or 8, wherein the broadcasting center (200)
receives (S23) from a first radar sensor device (400A) an information on a second radar sensor device (400B) without capability of communicating with the broadcasting center (200) and
updates (S24) the list (Lᵢ) by adding the second radar sensor device (400B) in said list (Lᵢ).

10. The method according to claim 9, wherein the information on the second radar sensor device (400B) includes a radar parameter information related to current radar operating parameters of the second radar sensor device (400B).

11. A radar sensor device (400A) for a vehicle including a communication interface (406) to communicate with a broadcasting center (200), via a wireless communication (300), and means (405, 407) for executing the steps of the method of claim 1.

12. A vehicle including at least one radar sensor device (400A) according to claim 11.

13. A computer program having instructions to cause the device of claim 11 to execute the steps of the method of claim 1.

14. A broadcasting center (200) including a communication interface (201) to communicate wirelessly with radar sensor devices (400) on vehicles (100) located in an area (500), and means (202, 203, 204) for executing the steps of the method of claim 7.

15. A computer program having instructions to cause the broadcasting center (200) of claim 14 to execute the steps of the method of claim 7.
